(19) **Europäisches Patentamt / European Patent Office / Office européen des brevets**

(11) **EP 4 372 526 B1**

(12) **EUROPEAN PATENT SPECIFICATION**

(45) Date of publication and mention
of the grant of the patent:
**28.01.2026 Bulletin 2026/05**

(21) Application number: **22207491.6**

(22) Date of filing: **15.11.2022**

(51) International Patent Classification (IPC):
***G06F 1/3231*** (2019.01)    ***H04B 1/3827*** (2015.01)
***H01Q 1/24*** (2006.01)

(52) Cooperative Patent Classification (CPC):
**H04B 1/3838; G06F 1/3231; H01Q 1/243**

(54) **DEVICES AND METHODS FOR COMMUNICATING A PROXIMITY SENSOR INTERRUPT ON A RADIO FREQUENCY TRANSMISSION LINE**

VORRICHTUNGEN UND VERFAHREN ZUR KOMMUNIKATION EINER NÄHERUNGSSENSORUNTERBRECHUNG AUF EINER HOCHFREQUENZÜBERTRAGUNGSLEITUNG

DISPOSITIFS ET PROCÉDÉS DE COMMUNICATION D'UNE INTERRUPTION DE CAPTEUR DE PROXIMITÉ SUR UNE LIGNE DE TRANSMISSION RADIOFRÉQUENCE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**22.05.2024 Bulletin 2024/21**

(73) Proprietor: **Altera Corporation**
**San Jose, CA 95134 (US)**

(72) Inventors:
• **SREENIVASAREDDY, Madhukiran**
**560103 Bangalore (IN)**

• **AAGIRU, Vamshi Krishna**
**560048 Bangalore (IN)**
• **MURIKKUMKADAN, Muhammed Naseef**
**Santa Clara, 95054 (US)**

(74) Representative: **Viering, Jentschura & Partner mbB**
**Patent- und Rechtsanwälte**
**Am Brauhaus 8**
**01099 Dresden (DE)**

(56) References cited:
**EP-A1- 4 016 853    US-B1- 10 469 079**

## Description

### Technical Field

Various aspects generally relating to transmit power control for regulating radiation exposure in wireless communications.

### Background

New communication technologies, such as 5G New Radio (NR), WiGig, and Wireless Local Area Networks (WLANs) such as WiFi, utilize higher radio frequencies in the millimeter wave (mmWave) spectrum and utilize beamforming to improve throughput and reduce frequency with existing wireless systems. While these techniques provide many advantages in these newer wireless systems, they may increase radio frequency (RF) radiation in the environment, including to users. For example, when a device uses beamforming to focus high RF transmissions in a narrow direction, the resulting beam may deliver elevated levels of radiation energy to a focused area. When this focused area is pointed at a user, the device may deliver high levels of harmful radiation to the user and the signal quality may also be significantly degraded. The amount of radiation energy emitted absorbed by a unit of mass of a user over time may be defined as the specific absorption rate (SAR).

Various regulators, including the Federal Communications Commission (FCC) and the International Commission on Non-Ionizing Radiation Protection (ICNIRP), and standardization bodies like the 3rd Generation Partnership Project (3GPP) have introduced SAR measures that limit the amount of radiation that a device can deliver to users. In response, methods and devices that implement SAR proximity sensors to detect human presence and to reduce antenna transmission power when human presence is detected near antennas have been introduced to comply with these regulatory measures.

US 10,469,079 B1 describes techniques to mitigate the effects of electromagnetic interference, caused by the sending or receiving of data, on a proximity sensor of an electronic device. In some instances, capacitance values measured by the proximity sensor may be inaccurate during times at which the electronic device is sending or receiving data. To mitigate this effect, the techniques consider the recurrent time slot(s) at which the electronic device is scheduled to send or receive data, and then disregards the capacitance values measured by the proximity sensor at these times.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:

FIG. **1** exemplarily shows a radio communication network according to some aspects;
FIG. **2** exemplarily shows an internal configuration of terminal device according to some aspects;
FIG. **3** exemplarily shows an internal configuration of a network access node in some aspects;
FIG. **4** exemplarily illustrates a block diagram of an existing SAR proximity sensor implementation;
FIG. **5** exemplarily illustrates a block diagram of an existing SAR proximity sensor implementation;
FIG. **6** exemplarily illustrates a block diagram of a SAR sensor implementation according to various examples of the present disclosure;
FIG. **7** exemplarily illustrates a block diagram of a SAR sensor implementation according to various examples of the present disclosure;
FIGS. **8A, 8B** exemplarily illustrate block diagrams of SAR sensor implementations according to various examples of the present disclosure;
FIG. **9** exemplarily illustrates a flowchart according to various examples of the present disclosure; and
FIGS. **10A, 10B** exemplarily illustrate block diagrams of SAR sensor array implementations according to various examples of the present disclosure.

### Description

Current radio systems come with multiple antenna configurations ranging from 2 to 8 or more antennas to support the multi-transmission scenarios like ULCA, ENDC & UL-MIMO configuration. To comply with SAR regulations, dynamic power reduction is required when a human body comes in proximity with the transmitting antenna. In multiple transmit antenna systems, each antenna needs a dedicated power control to comply with regulatory in the event of human proximity. This calls for multiple interrupt signals to be communicated to the radio/connectivity module from the sensor hub or host SoC. However, typical radio/connectivity modules follow an M.2 standard, which only requires a single interrupt pin for SAR detection (e.g., a single DPR pin). Due to this, assigning additional interrupt lines will be a major design challenge.

Existing SAR proximity sensor implementations can detect human presence and reduce antenna transmission power when human presence is detected near antennas but have various disadvantages. For example, in some existing SAR proximity sensor implementations, when the SAR proximity sensor detects human presence, the SAR proximity sensor is configured to send an interrupt to a host processor device (e.g., system-on-a-chip (SoC)). In such implementations, the host processor device plays a significant role in processing and handling interrupts from the SAR proximity sensor. In some other existing SAR proximity implemenations, when the SAR proximity sensor detects human presence, the SAR proximity sensor is configured to send an interrupt to a modem. In such implementations, it is very complicated to provide individual antenna power management in a multiple antenna system.

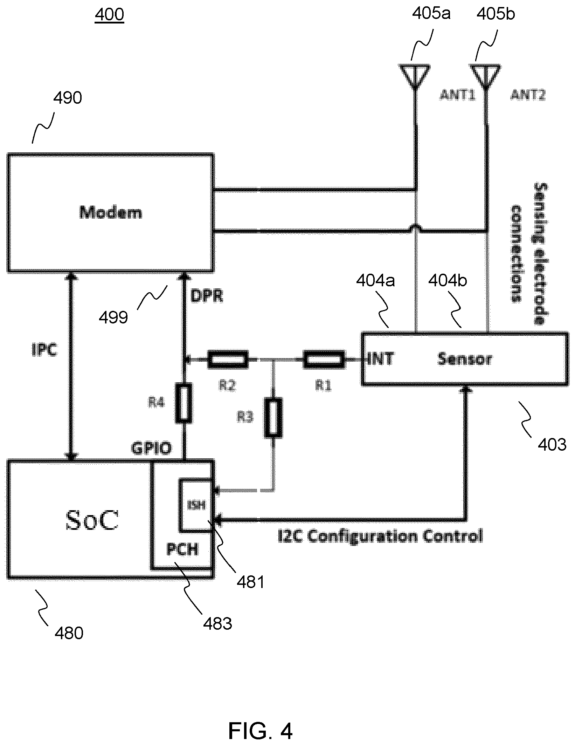

FIG. 4 illustrates an exemplary block diagram of an existing SAR proximity sensor implementation 400. Referring to FIG. 4, antennas 405a, 405b are electrically connected to a radio connectivity module (e.g., modem) 490, a SAR proximity sensor 403 includes proximity sensing electrodes 404a, 404b disposed near antennas 405a, 405b respectively, and a host processor device 480 connected to the proximity sensor 403 and the radio connectivity module 490. The host processor device 480 may include an interface hub 483 for communicating with the radio connectivity module 490 and the proximity sensor 403. The interface hub 483 may include a sensor hub 481 (e.g., a microcontroller unit/coprocessor/DSP) for receiving and processing data from the proximity sensor 403.

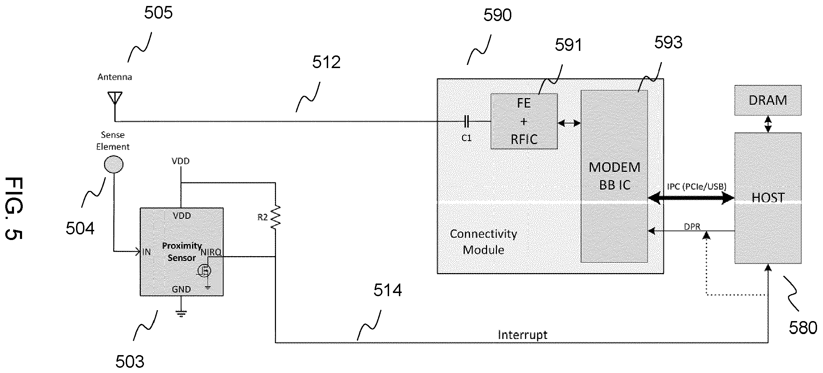

FIG. 5 illustrates an exemplary block diagram of an existing SAR proximity sensor implementation 500. Referring to FIG. 5, antenna 505 is electrically connected to a radio connectivity module 590, a SAR proximity sensor 503 includes proximity sensing electrode 504 disposed near antenna 505, and a host processor device 580 connected to the radio connectivity module 590. The radio connectivity module 590 may include front-end and RF IC module 591 and a baseband IC module 593. The host processor device 580 may also be connected to the sensor 503. The host processor device 580 may include an interface hub for communicating with the radio connectivity module 590 and the proximity sensor 503. For example, an interrupt pin (e.g., DPR pin) of the modem may be asserted by the host processor device 580 (e.g., SoC) or directly by the SAR sensor.

In some existing configurations, the proximity sensor 403, 503 is configured to transmit an interrupt to the host processor device 480, 580. For example, the interrupt port of the proximity sensor 403, 503 is connected to the interface hub 483 of the host processor device 480, 580. During proximity detection, when the host processor device 480, 580 receives an interrupt from the sensor 403, 503, the host processor device 480, 580 signals the radio connectivity module 490, 590 to indicate the interrupt condition (i.e., human presence detected)(e.g., SoC triggers a DPR pin of the modem through a GPIO port of the SoC based on an interrupt received on an ISH port of the SoC).

In some other existing implementations, the proximity sensor 403, 503 is configured to transmit an interrupt directly to the modem 490, 590. For example, the interrupt port of the proximity sensor 403, 503 is directly connected to an interrupt port of the radio connectivity module 490, 590 (e.g., via a DPR pin). That is, the interrupt is not transmitted to the host processor device 480, 580.

The disadvantages of current SAR implementations include higher system complexity as the proximity sensor interrupt is connected to the radio module through a sensor hub or from the host processor. In a case when the proximity sensor interrupt is indirectly asserted to the radio/connectivity module, there is software overhead from the system platform standpoint because the host processor device is involved in the interrupt handling process. In a case when the proximity sensor interrupt is directly asserted to the radio/connectivity module, multiple interrupt ports at the radio module would be required to support independent antenna power management in a multiple antenna transmission scenario. In a case of a single interrupt port (e.g. DPR pin) implementation, the existing solution cannot distinguish among multiple antenna transmit scenarios and the power back off will be applied to all antennas irrespective of which antenna/antennae detected the proximity.

The present disclosure provides an innovative way to power the SAR proximity sensor and communicate the sensor interrupt back to the radio/connectivity module using an antenna interconnect (e.g., a connection line between the radio connectivity module and the antenna, i.e., an RF path). In this manner, the proximity detection/interrupt can be communicated to a radio/connectivity module without using or adding additional interconnect pins on the radio/connectivity module interface and without involving the host system. The methods and devices provided herein are better able to regulate antenna transmission power and provide numerous advantages in wireless communications systems.

In some aspects, methods and devices are configured to use a single line for transmitting an RF signal to an antenna, powering a proximity sensor, and communicating an interrupt condition from the proximity sensor to the radio/connectivity module. The methods and devices provide that the SAR sensor is connected via a bias tee port. The methods and devices of this disclosure provide numerous advantages, including (but not limited to): eliminating involvement of the host processor; simplifying routing and interconnect design; allowing individual power management for multiple antennas.

The following detailed description refers to the accompanying drawings that show, by way of illustration, specific details and aspects in which the disclosure may be practiced.

The word "exemplary" is used herein to mean "serving as an example, instance, or illustration". Any aspect or design described herein as "exemplary" is not necessarily to be construed as preferred or advantageous over other aspects or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one. The terms "proper subset", "reduced subset", and "lesser subset" refer to a subset of a set that is not equal to the set, i.e. a subset of a set that contains less elements than the set.

Any vector and/or matrix notation utilized herein is exemplary in nature and is employed solely for purposes of explanation. Accordingly, aspects of this disclosure accompanied by vector and/or matrix notation are not limited to being implemented solely using vectors and/or matrices, and that the associated processes and computations may be equivalently performed with respect to sets, sequences, groups, etc., of data, observations, information, signals, samples, symbols, elements, etc.

As used herein, "memory" is understood as a non-transitory computer-readable medium in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

The term "terminal device" utilized herein refers to user-side devices (both portable and fixed) that can connect to a core network and/or external data networks via a radio access network. "Terminal device" can include any mobile or immobile wireless communication device, including User Equipment (UEs), Mobile Stations (MSs), Stations (STAs), cellular phones, tablets, laptops, personal computers, wearables, multimedia playback and other handheld or body-mounted electronic devices, consumer/home/office/commercial appliances, vehicles, and any other electronic device capable of user-side wireless communications. Without loss of generality, in some cases terminal devices can also include application-layer components, such as application processors or other general processing components that are directed to functionality other than wireless communications. Terminal devices can optionally support wired communications in addition to wireless communications. Furthermore, terminal devices can include vehicular communication devices that function as terminal devices.

The term "network access node" as utilized herein refers to a network-side device that provides a radio access network with which terminal devices can connect and exchange information with a core network and/or external data networks through the network access node. "Network access nodes" can include any type of base station or access point, including macro base stations, micro base stations, NodeBs, evolved NodeBs (eNBs), Home base stations, Remote Radio Heads (RRHs), relay points, Wireless Local Area Network (WLAN) Access Points (APs), Bluetooth master devices, DSRC RSUs, terminal devices acting as network access nodes, and any other electronic device capable of network-side wireless communications, including both immobile and mobile devices (e.g., vehicular network access nodes, moving cells, and other movable network access nodes). As used herein, a "cell" in the context of telecommunications may be understood as a sector served by a network access node. Accordingly, a cell may be a set of geographically co-located antennas that correspond to a particular sectorization of a network access node. A network access node can thus serve one or more cells (or sectors), where the cells are characterized by distinct communication channels. Furthermore, the term "cell" may be utilized to refer to any of a macrocell, microcell, femtocell, picocell, etc. Certain communication devices can act as both terminal devices and network access nodes, such as a terminal device that provides network connectivity for other terminal devices.

Various aspects of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. As used herein, a first radio communication technology may be different from a second radio communication technology if the first and second radio communication technologies are based on different communication standards.

Aspects described herein may use such radio communication technologies according to various spectrum management schemes, including, but not limited to, dedicated licensed spectrum, unlicensed spectrum, (licensed) shared spectrum (such as LSA, "Licensed Shared Access," in 2.3-2.4 GHz, 3.4-3.6 GHz, 3.6-3.8 GHz and further frequencies and SAS, "Spectrum Access System," in 3.55-3.7 GHz and further frequencies)., and may be use various spectrum bands including, but not limited to, IMT (International Mobile Telecommunications) spectrum (including 450 - 470 MHz, 790 - 960 MHz, 1710 - 2025 MHz, 2110 - 2200 MHz, 2300 - 2400 MHz, 2500 - 2690 MHz, 698-790 MHz, 610 - 790 MHz, 3400 - 3600 MHz, etc., where some bands may be limited to specific region(s) and/or countries), IMT-advanced spectrum, IMT-2020 spectrum (expected to include 3600-3800 MHz, 3.5 GHz bands, 700 MHz bands, bands within the 24.25-86 GHz range, etc.), spectrum made available under FCC's "Spectrum Frontier" 5G initiative (including 27.5 - 28.35 GHz, 29.1 - 29.25 GHz, 31 - 31.3 GHz, 37 - 38.6 GHz, 38.6 - 40 GHz, 42 - 42.5 GHz, 57 - 64 GHz, 64 - 71 GHz, 71 - 76 GHz, 81 - 86 GHz and 92 - 94 GHz, etc.), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz - 71 GHz band, any band between 65.88 GHz and 71 GHz, bands currently allocated to automotive radar applications such as 76-81 GHz, and future bands including 94-300 GHz and above.

For purposes of this disclosure, radio communication technologies may be classified as one of a Short-Range radio communication technology or Cellular Wide Area radio communication technology. Short Range radio communication technologies may include Bluetooth, WLAN (e.g., according to any IEEE 802.11 standard), and other similar radio communication technologies. Cellular Wide Area radio communication technologies may include Global System for Mobile Communications (GSM), Code Division Multiple Access 2000 (CDMA2000), Universal Mobile Telecommunications System (UMTS), Long Term Evolution (LTE), General Packet Radio Service (GPRS), Evolution-Data Optimized (EV-DO), Enhanced Data Rates for GSM Evolution (EDGE), High Speed Packet Access (HSPA; including High Speed Downlink Packet Access (HSDPA), High Speed Uplink Packet Access (HSUPA), HSDPA Plus (HSDPA+), and HSUPA Plus (HSUPA+)), Worldwide Interoperability for Microwave Access (WiMax) (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

The terms "radio communication network," "wireless network", "communication network," or the like, as utilized herein encompasses both an access section of a network (e.g., a radio access network (RAN) section) and a core section of a network (e.g., a core network section). The term "radio idle mode" or "radio idle state" used herein in reference to a terminal device refers to a radio control state in which the terminal device is not allocated at least one dedicated communication channel of a mobile communication network. The term "radio connected mode" or "radio connected state" used in reference to a terminal device refers to a radio control state in which the terminal device is allocated at least one dedicated uplink communication channel of a radio communication network.

Unless explicitly specified, the term "transmit" encompasses both direct (point-to-point) and indirect transmission (via one or more intermediary points). Similarly, the term "receive" encompasses both direct and indirect reception. Furthermore, the terms "transmit", "receive", "communicate", and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" may encompass one or both of transmitting and receiving, i.e., unidirectional or bidirectional communication in one or both of the incoming and outgoing directions. The term "calculate" may encompass both 'direct' calculations via a mathematical expression/formula/relationship and 'indirect' calculations via lookup or hash tables and other array indexing or searching operations.

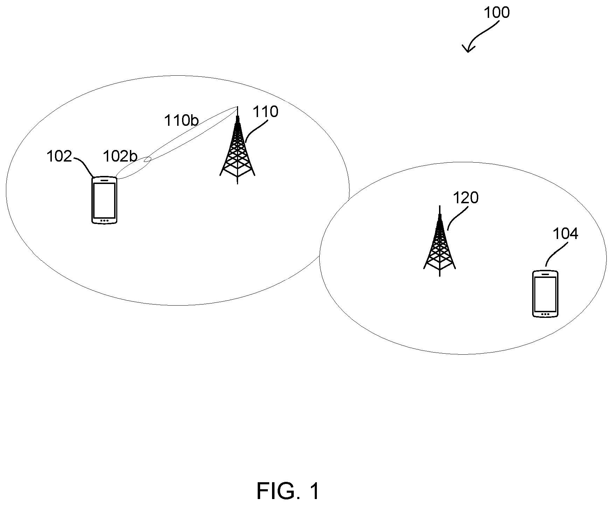

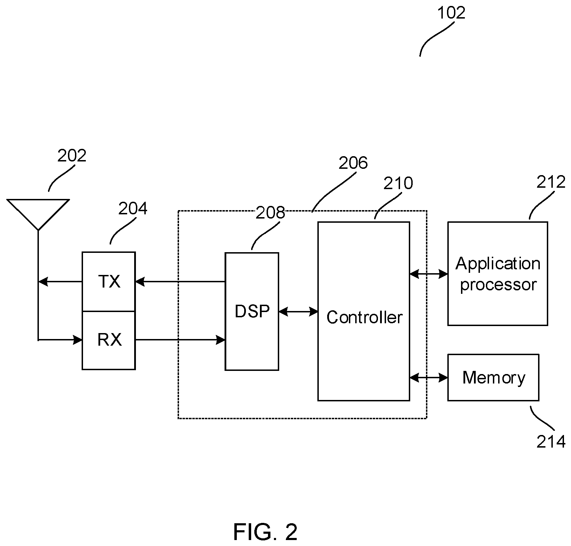

FIGs. 1 and 2 depict an exemplary network and device architecture for wireless communications. In particular, FIG. 1 shows exemplary radio communication network 100 according to some aspects, which may include terminal devices 102 and 104 and network access nodes 110 and 120. Radio communication network 100 may communicate with terminal devices 102 and 104 via network access nodes 110 and 120 over a radio access network. Although certain examples described herein may refer to a particular radio access network context (e.g.,5G, NR, LTE, or other 3rd Generation Partnership Project (3GPP) networks, WLAN/WiFi, Bluetooth, mmWave, etc.), these examples are demonstrative and may therefore be readily applied to any other type or configuration of radio access network. The number of network access nodes and terminal devices in radio communication network 100 is exemplary and is scalable to any amount.

In an exemplary cellular context, network access nodes 110 and 120 may be base stations (e.g., eNodeBs, NodeBs, Base Transceiver Stations (BTSs), or any other type of base station), while terminal devices 102 and 104 may be cellular terminal devices (e.g., Mobile Stations (MSs), User Equipment (UEs), or any type of cellular terminal device). Network access nodes 110 and 120 may therefore interface (e.g., via backhaul interfaces) with a cellular core network such as an Evolved Packet Core (EPC, for LTE), Core Network (CN, for UMTS), or other cellular core networks, which may also be considered part of radio communication network **100.** The cellular core network may interface with one or more external data networks. In an exemplary short-range context, network access node **110** and **120** may be access points (APs, e.g., WLAN or WLAN APs), while terminal device **102** and **104** may be short range terminal devices (e.g., stations (STAs)). Network access nodes **110** and **120** may interface (e.g., via an internal or external router) with one or more external data networks.

Network access nodes **110** and **120** (and, optionally, other network access nodes of radio communication network **100** not explicitly shown in FIG. **1)** may accordingly provide a radio access network to terminal devices **102** and **104** (and, optionally, other terminal devices of radio communication network **100** not explicitly shown in FIG. **1).** In an exemplary cellular context, the radio access network provided by network access nodes **110** and **120** may enable terminal devices **102** and **104** to wirelessly access the core network via radio communications. The core network may provide switching, routing, and transmission, for traffic data related to terminal devices **102** and **104,** and may further provide access to various internal data networks (e.g., control nodes, routing nodes that transfer information between other terminal devices on radio communication network **100,** etc.) and external data networks (e.g., data networks providing voice, text, multimedia (audio, video, image), and other Internet and application data). In an exemplary short-range context, the radio access network provided by network access nodes **110** and **120** may provide access to internal data networks (e.g., for transferring data between terminal devices connected to radio communication network **100)** and external data networks (e.g., data networks providing voice, text, multimedia (audio, video, image), and other Internet and application data).

The radio access network and core network (if applicable, such as for a cellular context) of radio communication network **100** may be governed by communication protocols that can vary depending on the specifics of radio communication network **100.** Such communication protocols may define the scheduling, formatting, and routing of both user and control data traffic through radio communication network **100,** which includes the transmission and reception of such data through both the radio access and core network domains of radio communication network **100.** Accordingly, terminal devices **102** and **104** and network access nodes **110** and **120** may follow the defined communication protocols to transmit and receive data over the radio access network domain of radio communication network **100,** while the core network may follow the defined communication protocols to route data within and outside of the core network. Exemplary communication protocols include LTE, UMTS, GSM, WiMAX, Bluetooth, WLAN, mmWave, etc., any of which may be applicable to radio communication network **100.**

As shown in radio communication network **100,** terminal device **102** and network access node **110** may each use beamforming techniques **102b** and **110b,** respectively, for communicating with one another. Each may both have at least one RF chain and multi-antenna arrays. Accordingly, the devices shown in network 100 may be capable of bidirectional beamforming. If a user is in the direction of the beam **102b,** for example, the user may be subject to increased SAR levels. In order to comply with regulatory measures, terminal device **102** may need to implement TAS mechanisms so that the amount of energy transmitted in the direction of the user does not violate (i.e., go over) a TAS energy budget for a given period of time. However, in addition to complying with these regulatory measures, terminal device **102** must also attempt to maintain a robust wireless link with network access node **110** to ensure communication quality is not degraded.

FIG. **2** shows an internal configuration of terminal device **102** according to some aspects, which may include antenna system **202,** radio frequency (RF) transceiver **204,** baseband modem **206** (including digital signal processor **208** and protocol controller **210),** application processor **212,** and memory **214.** Although not explicitly shown in FIG. **2,** in some aspects terminal device **102** may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Terminal device **102** may transmit and receive radio signals on one or more radio access networks. Baseband modem **206** may direct such communication functionality of terminal device **102** according to the communication protocols associated with each radio access network, and may execute control over antenna system **202** and RF transceiver **204** to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness the configuration of terminal device **102** shown in FIG. **2** depicts only a single instance of such components.

Terminal device **102** may transmit and receive wireless signals with antenna system **202,** which may be a single antenna or an antenna array that includes multiple antennas. In some aspects, antenna system **202** may additionally include analog antenna combination and/or beamforming circuitry. In the receive (RX) path, RF transceiver **204** may receive analog radio frequency signals from antenna system **202** and perform analog and digital RF front-end processing on the analog radio frequency signals to produce digital baseband samples (e.g., In-Phase/Quadrature (IQ) samples) to provide to baseband modem 206. RF transceiver **204** may include analog and digital reception components including amplifiers (e.g., Low Noise Amplifiers (LNAs)), filters, RF demodulators (e.g., RF IQ demodulators)), and analog-to-digital converters (ADCs), which RF transceiver **204** may utilize to convert the received radio frequency signals to digital baseband samples. In the transmit (TX) path, RF transceiver **204** may receive digital baseband samples from baseband modem **206** and perform analog and digital RF front-end processing on the digital baseband samples to produce analog radio frequency signals to provide to antenna system **202** for wireless transmission. RF transceiver 204 may thus include analog and digital transmission components including amplifiers (e.g., Power Amplifiers (PAs), filters, RF modulators (e.g., RF IQ modulators), and digital-to-analog converters (DACs), which RF transceiver **204** may utilize to mix the digital baseband samples received from baseband modem **206** and produce the analog radio frequency signals for wireless transmission by antenna system **202**. In some aspects baseband modem **206** may control the radio transmission and reception of RF transceiver **204,** including specifying the transmit and receive radio frequencies for operation of RF transceiver **204.**

As shown in FIG. **2,** baseband modem **206** may include digital signal processor **208,** which may perform physical layer (PHY, Layer 1) transmission and reception processing to, in the transmit path, prepare outgoing transmit data provided by protocol controller **210** for transmission via RF transceiver **204,** and, in the receive path, prepare incoming received data provided by RF transceiver **204** for processing by protocol controller **210.** Digital signal processor **208** may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor **208** may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor **208** may include one or more processors configured to retrieve and execute program code that defines control and processing logic for physical layer processing operations. In some aspects, digital signal processor **208** may execute processing functions with software via the execution of executable instructions. In some aspects, digital signal processor **208** may include one or more dedicated hardware circuits (e.g., ASICs, FPGAs, and other hardware) that are digitally configured to specific execute processing functions, where the one or more processors of digital signal processor **208** may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor **208** may be realized as a coupled integrated circuit.

Terminal device **102** may be configured to operate according to one or more radio communication technologies. Digital signal processor **208** may be responsible for lower-layer processing functions (e.g., Layer 1/PHY) of the radio communication technologies, while protocol controller **210** may be responsible for upper-layer protocol stack functions (e.g., Data Link Layer/Layer 2 and/or Network Layer/Layer 3). Protocol controller **210** may thus be responsible for controlling the radio communication components of terminal device **102** (antenna system **202**, RF transceiver **204,** and digital signal processor **208)** in accordance with the communication protocols of each supported radio communication technology, and accordingly may represent the Access Stratum and Non-Access Stratum (NAS) (also encompassing Layer 2 and Layer 3) of each supported radio communication technology. Protocol controller **210** may be structurally embodied as a processor configured to execute protocol stack software (retrieved from a controller memory) and subsequently control the radio communication components of terminal device **102** to transmit and receive communication signals in accordance with the corresponding protocol stack control logic defined in the protocol stack software. Protocol controller **210** may include one or more processors configured to retrieve and execute program code that defines the upper-layer protocol stack logic for one or more radio communication technologies, which can include Data Link Layer/Layer 2 and Network Layer/Layer 3 functions. Protocol controller **210** may be configured to perform both user-plane and control-plane functions to facilitate the transfer of application layer data to and from radio terminal device **102** according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller **210** may include executable instructions that define the logic of such functions.

In some aspects, terminal device **102** may be configured to transmit and receive data according to multiple radio communication technologies. Accordingly, in some aspects one or more of antenna system **202**, RF transceiver **204,** digital signal processor **208,** and protocol controller **210** may include separate components or instances dedicated to different radio communication technologies and/or unified components that are shared between different radio communication technologies. For example, in some aspects protocol controller **210** may be configured to execute multiple protocol stacks, each dedicated to a different radio communication technology and either at the same processor or different processors. In some aspects, digital signal processor **208** may include separate processors and/or hardware accelerators that are dedicated to different respective radio communication technologies, and/or one or more processors and/or hardware accelerators that are shared between multiple radio communication technologies. In some aspects, RF transceiver **204** may include separate RF circuitry sections dedicated to different respective radio communication technologies, and/or RF circuitry sections shared between multiple radio communication technologies. In some aspects, antenna system **202** may include separate antennas dedicated to different respective radio communication technologies, and/or antennas shared between multiple radio communication technologies. Accordingly, while antenna system **202**, RF transceiver **204**, digital signal processor **208**, and protocol controller **210** are shown as individual components in FIG. 2, in some aspects antenna system **202**, RF transceiver **204**, digital signal processor **208**, and/or protocol controller **210** may encompass separate components dedicated to different radio communication technologies.

The terminal device **102** may also include application processor **212** and memory **214**. Application processor **212** may be a CPU, and may be configured to handle the layers above the protocol stack, including the transport and application layers. Application processor **212** may be configured to execute various applications and/or programs of terminal device **102** at an application layer of terminal device **102**, such as an operating system (OS), a user interface (UI) for supporting user interaction with terminal device **102**, and/or various user applications. The application processor may interface with baseband modem **206** and act as a source (in the transmit path) and a sink (in the receive path) for user data, such as voice data, audio/video/image data, messaging data, application data, basic Internet/web access data, etc. In the transmit path, protocol controller **210** may therefore receive and process outgoing data provided by application processor **212** according to the layer-specific functions of the protocol stack, and provide the resulting data to digital signal processor **208**. Digital signal processor **208** may then perform physical layer processing on the received data to produce digital baseband samples, which digital signal processor may provide to RF transceiver **204**. RF transceiver **204** may then process the digital baseband samples to convert the digital baseband samples to analog RF signals, which RF transceiver **204** may wirelessly transmit via antenna system **202**. In the receive path, RF transceiver **204** may receive analog RF signals from antenna system **202** and process the analog RF signals to obtain digital baseband samples. RF transceiver **204** may provide the digital baseband samples to digital signal processor **208**, which may perform physical layer processing on the digital baseband samples. Digital signal processor **208** may then provide the resulting data to protocol controller **210**, which may process the resulting data according to the layer-specific functions of the protocol stack and provide the resulting incoming data to application processor **212**. Application processor **212** may then handle the incoming data at the application layer, which can include execution of one or more application programs with the data and/or presentation of the data to a user via a user interface.

Memory **214** may embody a memory component of terminal device **102**, such as a hard drive or another such permanent memory device. Although not explicitly depicted in FIG. **2**, the various other components of terminal device **102** shown in FIG. 2 may additionally each include integrated permanent and non-permanent memory components, such as for storing software program code, buffering data, etc.

In accordance with some radio communication networks, terminal devices **102** and **104** may execute mobility procedures to connect to, disconnect from, and switch between available network access nodes of the radio access network of radio communication network 100. As each network access node of radio communication network **100** may have a specific coverage area, terminal devices **102** and **104** may be configured to select and re-select between the available network access nodes in order to maintain a strong radio access connection with the radio access network of radio communication network **100**. For example, terminal device **102** may establish a radio access connection with network access node **110** while terminal device **104** may establish a radio access connection with network access node **120**. In the event that the current radio access connection degrades, terminal devices **102 or 104** may seek a new radio access connection with another network access node of radio communication network **100**; for example, terminal device **104** may move from the coverage area of network access node **120** into the coverage area of network access node **110**. As a result, the radio access connection with network access node **120** may degrade, which terminal device **104** may detect via radio measurements such as signal strength or signal quality measurements of network access node **120**.

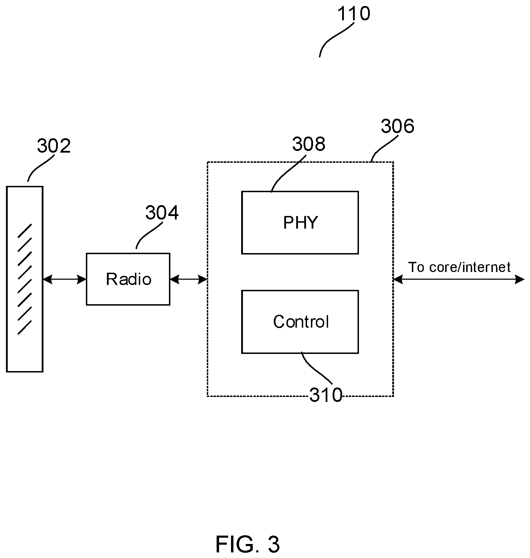

FIG. **3** shows an exemplary internal configuration of a network access node, such as network access node **110**, according to some aspects. As shown in FIG. 3, network access node **110** may include antenna system **302**, radio transceiver **304**, and baseband subsystem **306** (including physical layer processor **308** and protocol controller **310**). In an abridged overview of the operation of network access node **110**, network access node **110** may transmit and receive wireless signals via antenna system **302**, which may be an antenna array including multiple antennas. Radio transceiver **304** may perform transmit and receive RF processing to convert outgoing baseband samples from baseband subsystem **306** into analog radio signals to provide to antenna system **302** for radio transmission and to convert incoming analog radio signals received from antenna system **302** into baseband samples to provide to baseband subsystem **306**. Physical layer processor **308** may be configured to perform transmit and receive PHY processing on baseband samples received from radio transceiver **304** to provide to controller **310** and on baseband samples received from controller **310** to provide to radio transceiver **304**. Controller **310** may control the communication functionality of network access node **110** according to the corresponding radio communication technology protocols, which may include exercising control over antenna system **302,** radio transceiver **304,** and physical layer processor **308.** Each of radio transceiver **304,** physical layer processor **308,** and controller **310** may be structurally realized with hardware (e.g., with one or more digitally-configured hardware circuits or FPGAs), as software (e.g., as one or more processors executing program code defining arithmetic, control, and I/O instructions stored in a non-transitory computer-readable storage medium), or as a mixed combination of hardware and software. In some aspects, radio transceiver **304** may be a radio transceiver including digital and analog radio frequency processing and amplification circuitry. In some aspects, radio transceiver **304** may be a software-defined radio (SDR) component implemented as a processor configured to execute software-defined instructions that specify radio frequency processing routines. In some aspects, physical layer processor **308** may include a processor and one or more hardware accelerators, wherein the processor is configured to control physical layer processing and offload certain processing tasks to the one or more hardware accelerators. In some aspects, controller **310** may be a controller configured to execute software-defined instructions that specify upper-layer control functions. In some aspects, controller **310** may be limited to radio communication protocol stack layer functions, while in other aspects controller **310** may also be configured for transport, internet, and application layer functions.

Network access node **110** may thus provide the functionality of network access nodes in radio communication networks by providing a radio access network to enable served terminal devices to access communication data. For example, network access node **110** may also interface with a core network, one or more other network access nodes, or various other data networks and servers via a wired or wireless backhaul interface.

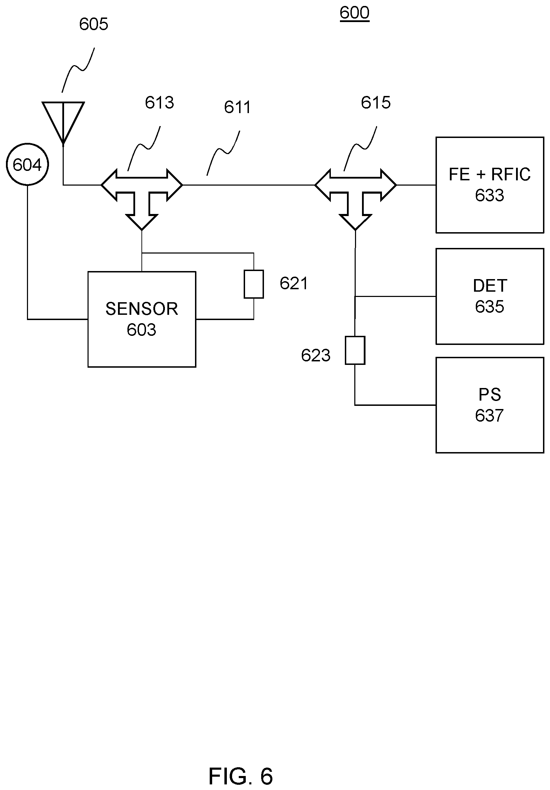

FIG. 6 illustrates an exemplary block diagram of a SAR sensor implementation 600 according to various examples of the present disclosure. Referring to FIG. 6, the SAR sensor implementation 600 may include an antenna 605, a SAR proximity sensor 603, a radio circuitry 633, a voltage-change detection circuitry 635, and a voltage source 637 electrically connected to each other through one conductive line 611 (e.g., a transmission line). That is, the antenna 605 is connected to the radio circuitry 633 through the conductive line 611. The radio circuitry 633 can provide a radio frequency (RF) signal to antenna 605 through the conductive line 611. The proximity sensor 603 is also connected to the power source 637 through the same conductive line 611. The power source 637 can provide a direct current (DC) voltage supply (e.g., VCC) through the conductive line 611 to power the proximity sensor 603. Additionally, the interrupt port of the sensor 603 is connected to the voltage-change detection circuitry 635 through the same conductive line 611. The sensor 603 can trigger an interrupt and generate an interrupt signal or proximity detection signal by changing the DC voltage level on the conductive line 611. The voltage-change detection circuitry 635 can monitor the DC voltage level (e.g., $V_{OUT}$) on the conductive line 611 and detect a voltage change corresponding to the interrupt signal or proximity detection signal.

A first end of the conductive line 611 is connected to a first bias tee circuit 613 and a second end of the conductive line 611 is connected to a second bias tee circuit 615. The first bias tee circuit 613 electrically connects the antenna 605, the proximity sensor 603, and the conductive line 611 to each other. The second bias tee circuit 615 electrically connects the radio circuitry 633, the voltage source 637 and the voltage-change detection circuitry 635, and the conductive line 611 to each other.

The antenna 605 may be a transmission antenna or a transmission/receiving antenna for over air RF signals. The radio circuitry 633 may include a front end circuitry and a radio frequency integrated circuit (RF IC) configured to provide an RF signal via the conductive line 611 to the antenna 605 for transmission over the air. The radio circuitry 633 may be connected to a modem or baseband IC. The voltage source 637 may be configured to provide a direct current voltage signal (e.g., VCC) via the conductive line 611 to power the proximity sensor 603. The proximity sensor 603 may be configured to detect human presence near the antenna 605 and generate an interrupt signal or proximity detection signal when human presence is detected. The proximity sensor 603 may be a SAR proximity sensor disposed near the antenna 605. The proximity sensor 603 may be configured to provide the interrupt signal (e.g., proximity detection signal) via the conductive line 611. The interrupt signal (e.g., proximity detection signal) may be a change in the direct current voltage signal on the conductive line 611. The voltage-change detection circuitry 635 may be configured to detect the interrupt signal (e.g., a direct current voltage signal change) on the conductive line 611. The radio circuitry 633, the voltage source 637 and voltage-change detection circuitry 635 may be included in a radio/connectivity module 630.

Each bias tee circuit may include three ports - an RF port, a DC port, and a combined port. The bias tee circuit can combine an RF signal (e.g., high frequency voltage changes) on the RF port and a DC signal (e.g., steady or low frequency voltage changes) on the DC port and provide the combined signal on the combined port. The bias tee circuit can separate a combined signal (e.g., a multiplexed RF and DC signal including high frequency and low frequency components) to provide an RF signal (e.g., high frequency components) on the RF port and a DC signal (e.g., steady or low frequency components) on the DC port.

In a non-limiting example, a bias tee circuit may include a capacitor (for DC blocking) and an inductor (for RF decoupling). The capacitor acts as a DC block, allowing RF signals to pass. The inductor acts as an RF decoupler, allowing DC signals to pass. That is, a bias tee circuit may be a T-shaped junction having an RF port as a first leg, a DC port as a second leg, and a combined port as a third leg. The first leg (i.e., RF port) may include a capacitor, the second leg (i.e., DC port) may include an inductor, and the third leg (i.e., combined port) may extend from a point between the inductor and the conductor.

Referring to FIG. 6, the power source 637 may be electrically connected to a DC port of the second bias tee circuit 615, the radio circuitry 633 may be electrically connected to an RF port of the second bias tee circuit 615, and the conductive line 611 may be electrically connected to the combined port of the second bias tee circuit 615. A DC voltage signal provided from the power source 637 may be combined with a radio frequency (RF) signal provided from the radio circuit 633 by means of the second bias tee circuit 615 and the combined RF-DC signal is provided on the conductive line 611.

The power input port (e.g., VDD pin) of the sensor 603 may be electrically connected to a DC port of the first bias tee circuit 613, the antenna 605 may be electrically connected to an RF port of the first bias tee circuit 613, and the conductive line 611 may be electrically connected to the combined port of the first bias tee circuit 613. The combined RF-DC signal on the conductive line 611 may be separated by means of the first bias tee circuit 613. The DC voltage signal provided from the power source 637 may be provided to the DC port of the first bias tee circuit 613 to power the sensor 603. The RF signal provided from the radio circuitry 633 may be provided to the RF port of the first bias tee circuit 613 to provide the RF signal to the antenna 605.

The interrupt port (e.g., NIRQ pin) of sensor 603 may be electrically connected to the DC port of the first bias tee circuit 613 through a resistor 621. For example, the interrupt port may be an open drain NIRQ interrupt that pulls the voltage towards ground when activated. That is, during proximity detection, the proximity sensor 603 pulls down the interrupt pin (NIRQ), this pull-down sink current is used to lower the voltage on conductive line 611 by forming a resistor voltage divider. For example, the open drain interrupt is connected to the RF path through an inductor and resistor. The inductor is used to isolate the RF from the conductive line 611 and at the same time it will pass DC voltage to/from the sensor. The inductor may be part of a bias tee circuit. When the interrupt is triggered, the resistor 621 forms part of the voltage divider and changes the DC voltage level on the conductive line 611. Accordingly, during the proximity detection, the proximity sensor may generate an interrupt that can be detected on the RF path.

The voltage source 637 may be electrically connected to the DC port through a resistor 623. The voltage source 637 and resistors 621 (e.g., R2) and 623 (e.g., R1) may form a resistive divider circuit when an interrupt (e.g., open drain interrupt) is triggered. As such, the voltage at a point between resistors 621 (e.g., R2) and 623 (e.g., R1) (e.g., conductive line 611, VDD pin of the sensor 603, input to the voltage-change detection circuitry 635) may be considered the output voltage (e.g., $V_{OUT}$). Additionally, when the interrupt is triggered, the output of the resistive divider network (e.g., $V_{OUT(proximity)}$) becomes or sets the DC voltage level on the conductive line 611.

As the DC voltage level on the conductive line 611 (e.g., $V_{OUT}$) is also used to provide power to the sensor 603, the change in the DC voltage level must remain within a power supply operating range of the sensor 603 (e.g., see Eq. 3). The resistor ratio of resistors 621 and 623 may be configured so that the resistive divider circuit provides an output voltage within the operative voltage range of the sensor. For example, a SAR proximity sensor 603 may operate in a wide voltage range (e.g., from VDD1 to VDD2). At normal condition (e.g., no human presence in proximity detected, i.e., no interrupt), the proximity sensor 603 operates at a nominal voltage (e.g., 3.3V). That is, the power source 637 may provide a direct current voltage signal at the nominal voltage VCC. When no proximity is detected, $V_{OUT}$ is approximately VCC. When proximity detection happens, the proximity sensor 603 may generate an interrupt signal or proximity indication signal on an open drain output pin (e.g., by pulling the voltage on the pin toward 0V) which results in the formation of a resistor voltage divider with resistors 621 and 623. The voltage across the resistor 621 (i.e., R2) between the open drain output pin and the VDD pin of the sensor 603 when proximity is detected may be considered $V_{OUT(proximity)}$. $V_{OUT(proximity)}$ may also be considered as the interrupt signal or proximity indication signal at the voltage-change detection circuit on the radio-/connectivity module side by neglecting small current taken by proximity sensor.

The DC voltage at a point between the resistors 621 and 623, $V_{OUT}$, is also the input for powering the sensor 603. That is, $V_{OUT}$ (including $V_{OUT(proximity)}$ and $V_{OUT(no\ proximity)}$) must be within the operating voltage range of the sensor 603. For example, this is reflected in Eq. 3.

The DC voltage at a point between the resistors 621 and 623, $V_{OUT}$, is also the input to the voltage-change detection circuit 635. Referring to Eqs. 1 and 2, in normal condition (i.e., no human presence detected in proximity of the respective antenna) $V_{OUT(no\ proximity)}$ is approximately the same as VCC and when an interrupt is asserted by the sensor 603 (i.e., human presence detected in proximity of the respective antenna) $V_{OUT(proximity)}$ is a fraction of VCC based on the values of resistors 621 (i.e., R2) and 623 (i.e., R1).

$$V_{OUT} \cong VCC \qquad \text{-- No proximity (Eq. 1)}$$

$$V_{OUT} \cong VCC \left[ \frac{R_2}{R_1 + R_2} \right] \text{-- Proximity (Eq. 2)}$$

$$VDD1 < V_{OUT} < VDD2 \ \text{(Eq. 3)}$$

The change in output voltage ($V_{OUT}$) due to the proximity interrupt (e.g., pull-down) can be detected by the radio/connectivity module using various detection mechanisms, including, for example, a comparator based implementation or an analog-to-digital converter (ADC) based implementation.

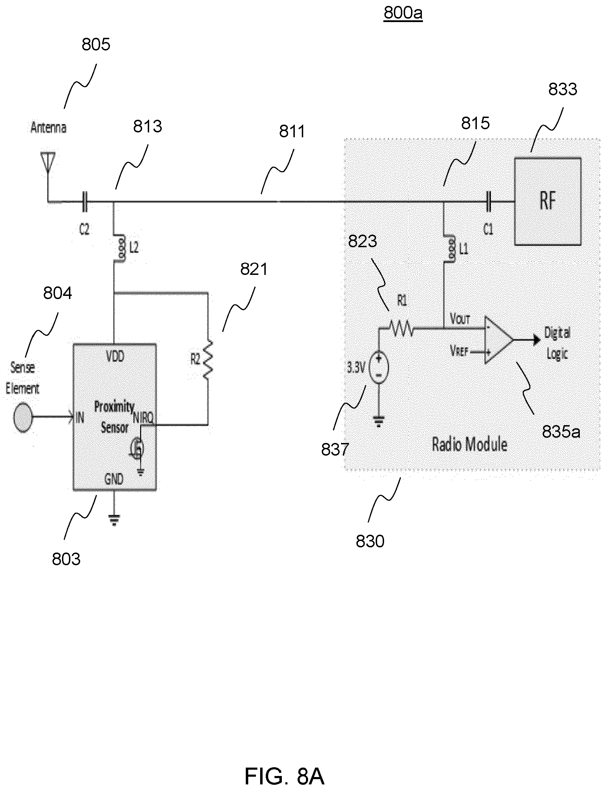

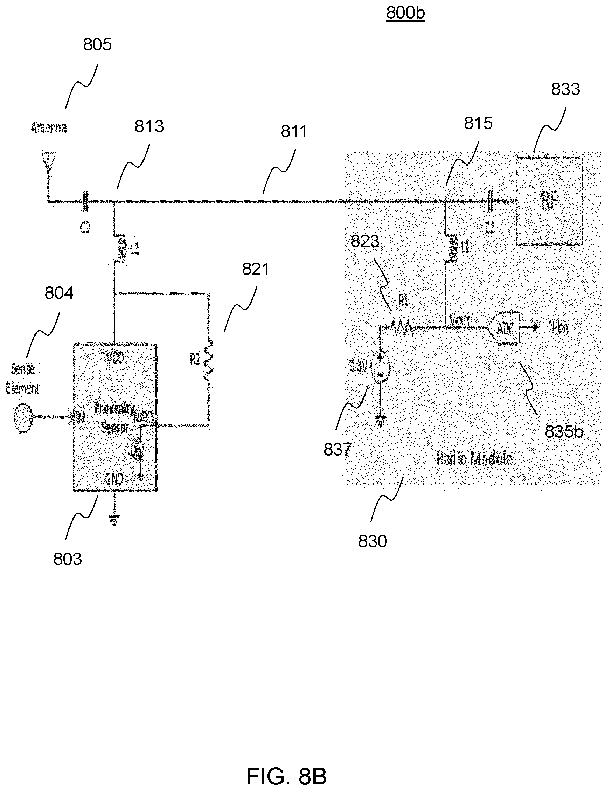

The voltage-change detection circuit 635 may be directly connected to the DC port of the second bias tee circuit 615, so the voltage on the conductive line 611 can be passed to the voltage-change detection circuit 635. Thus, a change in voltage on the conductive line 611 may be detected by the voltage-change detection circuit 635. The voltage-change detection circuit 635 in the radio connectivity module 630 may be implemented as a comparator or an ADC. For example, the voltage-change detection circuit 635 may be implemented as a comparator or an ADC. The details of the implementation are discussed in greater detail in the examples corresponding to FIGS. 8A, 8B.

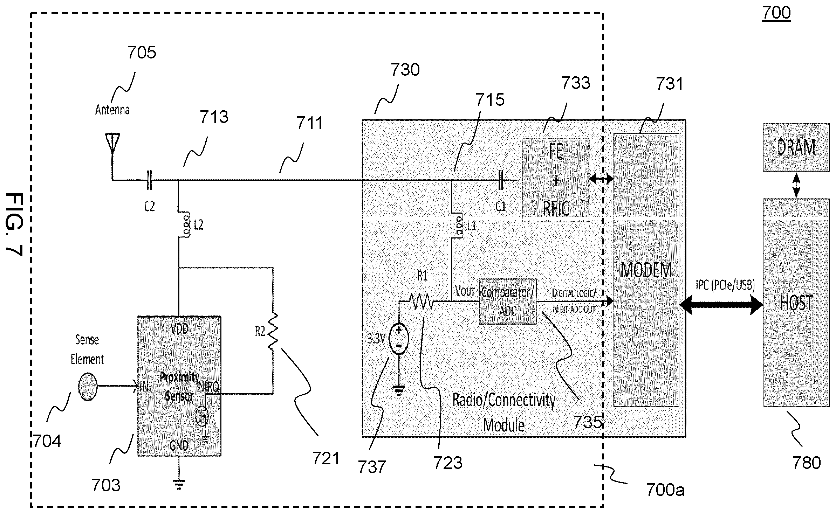

FIG. 7 illustrates an exemplary block diagram of a SAR sensor implementation 700 according to various examples of the present disclosure. Referring to FIG. 7, the SAR sensor implementation 700 may include an antenna 705, a SAR proximity sensor 703, a radio connectivity module 730, a voltage-change detection circuitry 735, and a voltage source 737 electrically connected to each other through one conductive line 711 (e.g., an RF path). That is, the antenna 705 is connected to the radio connectivity module 730 through the conductive line 711. The radio connectivity module 730 can provide a radio frequency (RF) signal to antenna 705 through the conductive line 711. The proximity sensor 703 is also connected to the power source 737 through the same conductive line 711. The power source 737 can provide a direct current voltage supply (e.g., VCC) through the conductive line 711 to power the proximity sensor 703. Additionally, the interrupt port (e.g., pin) of the sensor 703 is connected to the voltage-change detection circuitry 735 through the same conductive line 711. The sensor 703 can trigger an interrupt (i.e., send an interrupt signal) by changing the DC voltage level on the conductive line 711 that can be detected by the voltage-change detection circuitry 735. As shown in FIG. 7, the sensor 703 does not need to be connected to the host processor device 780. The radio connectivity module 730 may include a radio circuitry 733, a baseband IC 731, the voltage-change detection circuit 735, and the power source 737. A first end of the conductive line 711 is connected to a first bias tee circuit 713 and a second end of the conductive line 711 is connected to a second bias tee circuit 715. The first bias tee circuit 713 electrically connects the antenna 705, the proximity sensor 703, and the conductive line 711 to each other. The second bias tee circuit 715 electrically connects the radio circuitry 733, the voltage source 737 and the voltage-change detection circuitry 735, and the conductive line 711 to each other.

Similar to SAR implementation 600, the voltage-change detection circuit 735 may be directly connected to the DC port of the second bias tee circuit 715, so the voltage on the conductive line 711 can be passed to the voltage-change detection circuit 735. Thus, a change in voltage on the conductive line 711 at the sensor side resulting from the formation of a voltage divider circuit created in response to a pull-down interrupt may be detected on the radio connectivity module side by the voltage-change detection circuit 735. The voltage-change detection circuit 735 in the radio connectivity module 730 may be implemented as a comparator or an ADC.

FIGS. 8A, 8B illustrate exemplary block diagrams of SAR sensor implementations according to various examples of the present disclosure. As shown in FIGS. 8A, 8B respectively, a comparator circuit or an ADC may be used to detect the change in voltage at the radio connectivity module side. Additionally, if an in-built ADC is available in a baseband IC chip or modem chip, the in-built ADC can be used for detection OR a comparator may be added.

**Comparator Implementation:**

Comparator 835a receives as input a reference voltage $V_{REF}$ and a DC voltage on the conductive line (i.e., $V_{OUT}$) (e.g., the instantaneous DC voltage on the RF path) and generates as output either a low or high digital logic based on the comparison of $V_{OUT}$ to $V_{REF}$. For example, the $V_{REF}$ may be based on a voltage difference between VCC and $V_{OUT}$ (proximity), where VCC is the nominal voltage provided by the power source and $V_{OUT}$ (proximity) is the DC voltage measured on the conductive line when the sensor interrupt is triggered (e.g., NIRQ pin is pulled-down). Referring to Eqs, 1 and 2, $V_{REF}$ may be determined based on VCC and $V_{OUT(proximity)}$ according to Eq. 4.

$$V_{REF} = VCC - \left[ \frac{VCC - V_{OUT(proximity)}}{2} \right] \quad (\text{Eq. 4})$$

If $V_{OUT}$ is larger than $V_{REF}$ then there is no interrupt signaled by the sensor. If $V_{OUT}$ is less than $V_{REF}$ then there is an interrupt or detection signaled by the sensor. One digital logic value (e.g., low) may indicate no interrupt and another digital logic value (e.g., high) may indicate an interrupt is triggered. The baseband IC 731 of the radio connectivity module 830 may use the digital logic to discontinue TX power back off or apply TX power back off based on the predefined values in a look up table (LUT) for the corresponding antenna which reported proximity.

**ADC Implementation:**

ADC 835b receives as input a DC voltage on the conductive line (i.e., $V_{OUT}$) (e.g., the instantaneous DC voltage on the RF path) and generates as output an N-bit digital data value corresponding to the voltage of $V_{OUT}$. The N-bit digital value may be provided to a baseband IC 731. The baseband IC 731 may detect a change in voltage by comparing the N-bit ADC output to a predefined value. The predefined value may be an N-bit digital value corresponding to an ADC conversion of $V_{REF}$ as defined in Eq. 4. If $V_{OUT}$ is larger than $V_{REF}$ then there is no interrupt signaled by the sensor. If $V_{OUT}$ is less than $V_{REF}$ then there is an interrupt signaled by the sensor. Based on the comparison, the baseband IC 731 of the radio connectivity module 830 may discontinue TX power back off or apply TX power back off based on the predefined values in a look up table (LUT) for the corresponding antenna which reported proximity.

The comparator or ADC implementations discussed above may also apply to the exemplary SAR implementations 600 and 700.

Look-Up Table (LUT)

When the radio connectivity module (e.g., modem) 630, 730, 830 is aware of the interrupt condition (e.g., proximity detection) of the proximity sensor, the radio connectivty module 630, 730, 830, 1030 (e.g., modem or baseband IC 631, 731, 831, 1031) limits the antenna transmission power based on a predefined look up table (LUT) stored in modem software.

A LUT may include a set of transmission power limits defined by a system designer based on an initial SAR test performed on the system. The set of transmission power limits may include a limit per given band and corresponding antenna.

| Table 1: LUT | | | | | |
|---|---|---|---|---|---|
| **Band Details** | **TX Power limit** | | | | |
| | ANT1 | ANT2 | ANT3 | | ANTn |
| **B1** | 14dBm | 13dBm | 13 dBm | | 13dBm |
| **B2** | 15dBm | 14dBm | 14dBm | | 14dBm |
| **B3** | 16dBm | 17dBm | 13 dBm | | 14dBm |
| **B4** | 15dBm | 14dBm | 14dBm | ... | 13dBm |
| **B5** | 13dBm | 15dBm | 13 dBm | | 14dBm |
| **B7** | 16dBm | 16dBm | 17dBm | | 16dBm |
| | . . . | | | | |
| **Nth Band** | 16dBm | 17dBm | 13 dBm | | 15dBm |

The LUT may be implemented as part of a software executed by the modem or baseband IC.

Referring to Table 1, in Scenario 1: Antenna ANT1 detects human proximity while operating in band B2, the corresponding TX power limit value may be selected from a LUT table and the new TX power limit may be applied to the corresponding antenna (e.g., ANT1) to control the SAR value.

Referring to Table 1, Scenario 2: In dual transmit mode antenna ANT1 is transmitting in band B2 and antenna ANT2 is transmitting in band B5, if only antenna ANT2 detects human proximity a corresponding interrupt will be triggered, and a corresponding TX power limit value may be selected from a LUT table and the selected power limit would be applied only to antenna ANT2 to control the SAR.

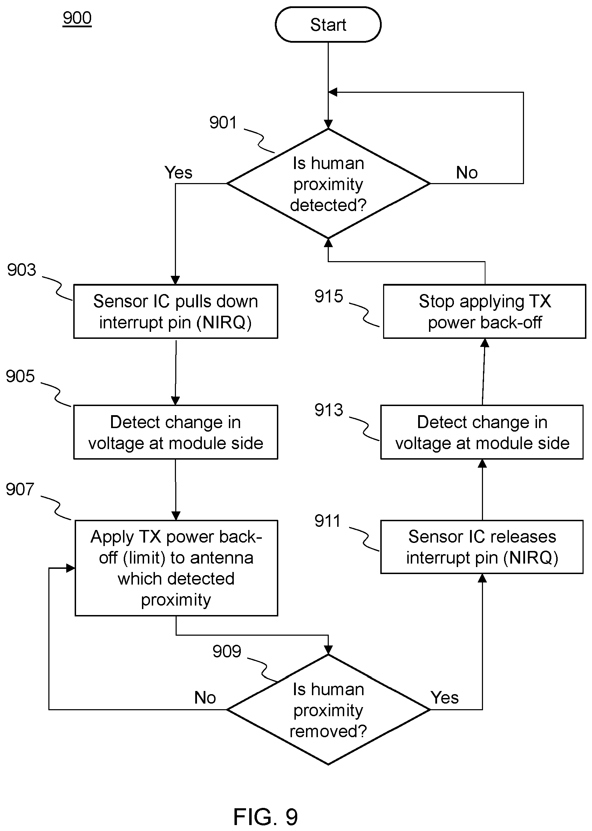

FIG. 9 illustrates an exemplary flow chart according to examples of the present disclosure. At 901, the SAR proximity sensor detects if there is human presence in proximity to an antenna. If there is no human presence detected, the sensor continues to monitor. At 903, if the sensor detects human presence, the sensor pulls down the interrupt pin (e.g., NIRQ)(sensor side). At 905, the voltage-change detection circuit detects a change in DC voltage due to the pull down (radio connectivity module side). At 907, the radio circuitry (e.g., RFIC or baseband IC) applies a transmit power back-off (e.g., a new transmit power limit) to the antenna which detected proximity. At 909, the sensor detects if there is still human presence in proximity to the antenna. If there is still human presence, the sensor continues to monitor. At 911, if the sensor no longer detects human presence, the sensor releases the interrupt pin (e.g., NIRQ)(sensor side). At 913, the voltage-change detection circuit detects a change in DC voltage due to the release of the pull down (radio connectivity module side). At 915, the radio circuitry ends the transmission power back-off to the antenna which stopped detecting proximity.

Scalability

The SAR implementations 600, 700, 800a, 800b disclosed herein can be scaled into multi transmit scenarios and multiple radio circuitry modules. The radio connectivity module can discern each individual antenna which detected proximity and apply individualized transmission power back offs corresponding to those antennas. A SAR sensor array implementation 1000 may include a plurality of SAR implementations 600, 700a, 800a, 800b. That is, the SAR sensor array implementation 1000 may include a radio connectivity module 1030 including a modem or baseband IC 1031 and a SAR implementation 600, 700a, 800a, 800b for each antenna of a multiple antenna system. The modem or baseband IC 1031 may include a plurality of general purpose input/output pins or ADC input pins. The modem or baseband IC 1031 is configured to receive each proximity detection signal from the respective SAR implementations 600, 700a, 800a, 800b via a respective general purpose input/output pin or a respective ADC input pin. The modem or baseband IC 1031 may be connected to the radio circuitry 633, 833, 733. The modem or baseband IC 1031 may be configured to independently apply transmission back-off to a respective antenna in response to a respective interrupt/detection signal corresponding to the antenna via a respective radio circuitry 633, 833, 733.

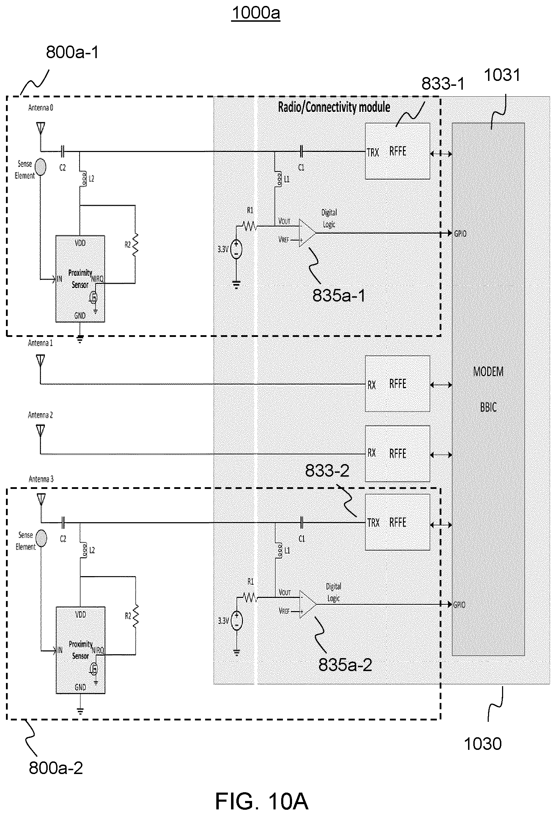

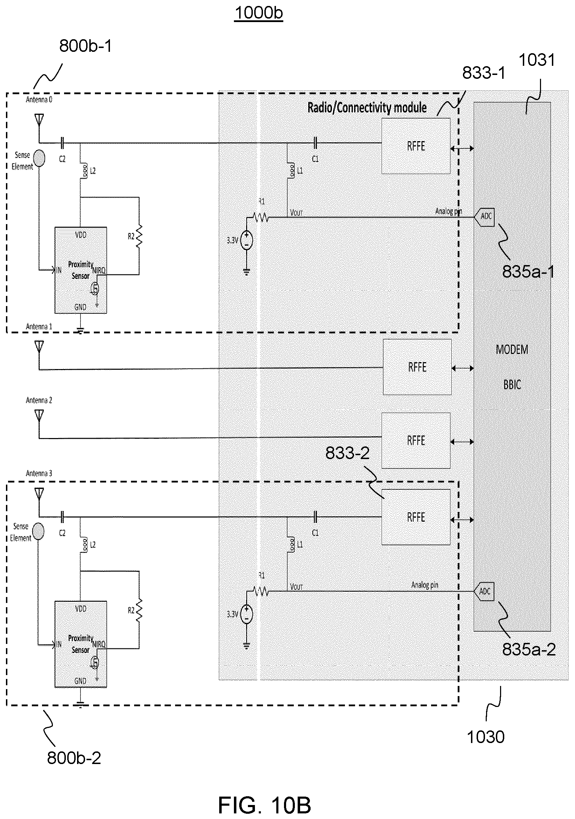

FIGS. 10A and 10B illustrate exemplary block diagrams of SAR sensor array implementations 1000a, 1000b according to various examples of the present disclosure. Referring to FIG. 10A, the SAR sensor array implementation 1000a may include two or more of the implementations of 800a (e.g., 800a-1, 800a-2, ..., 800a-n) connected to a modem or baseband IC 1031. For example, there may be an implementation for each transmit antenna. Each of the radio circuitry 833-1, 833-2, ... 833-n may include front end circuitry or front end and RF circuitry which is connected to the baseband IC 1090. Each comparator circuit 835a-1, 835a-2, ... 835a-n, may be connected to a respective general purpose (GPIO) port of the baseband IC 1090 instead of to a single interrupt port (e.g., DPR) of the baseband IC. Referring to FIG. 10B, the SAR sensor array implementation 1000b may include two or more of the implementations of 800b (e.g., 800b-1, 800b-2, ..., 800b-n) connected to a modem or baseband IC 1090. For example, there may be an implementation for each transmit antenna. Each of the radio circuitry 833-1, 833-2, ... 833-n may include front end circuitry or front end and RF circuitry which is connected to the baseband IC 1090. Each ADC 835b-1, 835b-2, ... 835b-n, may be an in-built ADC port of the baseband IC that can receive an analog voltage. Each ADC 835b-1, 835b-2, ... 835b-n may receive a respective (e.g., $V_{OUT}$) directly into the baseband IC 1090 instead of to a single interrupt port (e.g., DPR) of the baseband IC. In general, a SAR sensor array implementation 1000 may similarly include two or more of the implementations of 600 or 700. Accordingly, the SAR sensor array implementations disclosed herein are not constrained by the number of interrupt ports of a baseband IC.

The advantages of this implementation include no dependence on the host system or the host software for SAR implementation; no additional cable, traces and flexible printed circuit boards (FPCs) for proximity sensor supply and interrupt (less design complexity); the power back-off can be applied only for the antenna(s) which detected proximity, instead complete back-off (i.e., back-off on all antennas). Proximity detection and power back-off can be applied even during abnormal platform states such as OS crash or system hang, as the proposed implementation is independent of the host (SOC). The proposed implementation is scalable for multiple transmit antenna configurations. It can also be extended to multiple radio modules (e.g., WWAN and WLAN). The proximity and power back-off can be functional when the connected modem is in Standby mode as well.

While the above descriptions and connected figures may depict electronic device components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc. Also, it is appreciated that particular implementations of hardware and/or software components are merely illustrative, and other combinations of hardware and/or software that perform the methods described herein are within the scope of the disclosure.

It is appreciated that implementations of methods detailed herein are exemplary in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

**Claims**

1.  A communication device (600, 700, 800) comprising:

    an antenna (605, 705, 805);
    a proximity sensor (603, 703, 803) configured to detect human presence near the antenna (605, 705, 805) and generate an interrupt signal when human presence is detected;
    a radio frequency circuitry (633, 733, 833) configured to provide a radio frequency signal via a transmission line (611, 711, 811) to the antenna (605, 705, 805) for transmission over the air;
    a voltage source (637, 737, 837) configured to provide a power supply voltage to the proximity sensor (603, 703, 803); and
    a voltage-change detection circuitry (635, 735, 835a, 835b) configured to detect the interrupt signal;
    a first bias tee circuit (613, 713, 813) electrically connecting the antenna (605, 705, 805), the proximity sensor (603, 703, 803), and the transmission line (611, 711, 811) to each other;
    a second bias tee circuit (615, 715, 815) electrically connecting the radio frequency circuitry (633, 733, 833), the voltage source (637, 737, 837), the voltage-change detection circuitry (635, 735, 835), and the transmission line (611, 711, 811) to each other; and
    a modem circuitry (731, 1031) configured to determine a transmission power of the antenna based on the whether the interrupt signal is detected, the modem circuitry electrically connected to the radio frequency circuitry,
    wherein, the proximity sensor (603, 703, 803) is electrically connected to the first bias tee circuit (613, 713, 813) through a first resistor (621, ), the voltage source (637, 737, 837) is electrically connected to the second bias tee circuit (615, 715, 815) through a second resistor (623, 723, 823), voltage-change detection circuitry (635, 735, 835a, 835b) is electrically connected to a point between the second resistor (623, 723, 823) and the second bias tee circuit (615, 715, 815),
    wherein, the interrupt signal is a proximity indication signal having a voltage corresponding to a fraction of the power supply voltage, the fraction being a ratio based on the first and second resistors.

2.  The communication device of claim 1, wherein each of the first and second bias tee circuits (613, 615) includes a first port configured to pass voltage biasing signals, a second port configured to pass radio-frequency signals, and a combined port configured to pass both the voltage biasing signals and radio-frequency signals.

3.  The communication device of claim 2, wherein the antenna (605, 705, 805) is electrically connected to the second port of the first bias tee circuit, the proximity sensor (603, 703, 803) is electrically connected to the first port of the first bias tee circuit, and a first end of the transmission line is electrically connected to the combined port of the first bias tee circuit, and
    wherein the radio frequency circuitry (633, 733, 833) is electrically connected to the second port of the second bias tee circuit, the voltage source (637, 737, 837) and the voltage-change detection circuitry (635, 735, 835a, 835b) are electrically connected to the first port of the second bias tee circuit, and a second end of the transmission line is electrically coupled to the combined port of the second bias tee circuit.

4.  The communication device of claim 3, wherein the proximity sensor (603, 703, 803) includes a power port and an interrupt port, the power port is electrically connected to the first port of the first bias tee circuit and the interrupt port is electrically connected to the power port and the first port of the first bias tee circuit through a first resistor,

    wherein the radio frequency circuitry (633, 733, 833) includes an antenna port electrically connected to the second port of the second bias tee circuit,
    wherein the voltage source (637, 737, 837) is electrically connected to the first port of the second bias tee circuit through the second resistor (623, 723, 823), and
    wherein the voltage-change detection circuitry (635, 735, 835a, 835b) includes a voltage input port electrically coupled to the first port of the second bias tee circuit.

5.  The communication device of claim 4, wherein the first and second resistors (621, 623, 721, 723, 821, 823) comprise a resistor voltage divider circuit.

6.  The communication device of claim 5, wherein the proximity sensor (603, 703, 803) is configured to operate within a range of power supply voltages, and wherein the interrupt port is configured as an open drain interrupt, and wherein the resistor voltage divider circuit is configured to provide a power voltage within the range of power supply voltages, wherein, preferably, the power voltage is the power supply voltage when the interrupt signal is not generated and the power voltage is a fraction of the power supply voltage when the interrupt signal is generated.

7. The communication device of any one of claims 1-6, wherein the first port of the first and second bias tee circuits is a low-frequency port and the second port of the first and second bias tee circuits is a high-frequency port.

8. The communication device of any one of claims 1-7, wherein the voltage-change detection circuitry (635, 735, 835a) includes a voltage comparator circuitry.

9. The communication device of claim 8, wherein the voltage-change detection circuitry (635, 735, 835a) includes a second voltage input port configured to receive a reference voltage and an output port configured to provide a digital signal to the modem circuitry, wherein the voltage comparator circuitry is configured to compare a voltage at the voltage input port to the reference voltage and generate a digital logic output at the output port, wherein the digital logic output indicates whether the interrupt signal is detected.

10. The communication device of any one of claims 1-7, wherein the voltage-change detection circuitry (635, 735, 835b) comprises an analog-to-digital converter circuitry included in the modem circuitry.

11. The communication device of claim 10, wherein the analog-to-digital converter circuitry converts a voltage at the first port of the second bias tee circuit to a digital value and the voltage-change detection circuitry (635, 735, 835b) compares the digital value to a predetermined threshold value and generates an output that indicates whether the interrupt signal is detected.

12. The communication device of any one of claims 1-11, wherein the modem circuitry (731, 1031) is configured to determine the transmission power based on predefined values in a look up table corresponding to the antenna.

13. The communication device of any one of claims 1-12, wherein the first port of the first and second bias tee circuits includes an inductor, the second port of the first and second bias tee circuits includes a capacitor, and the combined port of the first and second bias tee circuits includes a point between the inductor and the capacitor.

14. The communication device of any one of claims 1-13, wherein the proximity sensor (603, 703, 803) is a SAR sensor.

15. The communication device of any one of claims 1-14, further comprising:

   a second antenna;
   a second proximity sensor configured to detect human presence near the second antenna and generate a second interrupt signal when human presence is detected;
   a second radio frequency circuitry configured to provide a second radio frequency signal via a second transmission line to the second antenna for transmission over the air;
   a second voltage source configured to provide a power supply voltage to the second proximity sensor; and
   a second voltage-change detection circuitry configured to detect the second interrupt signal;
   a third bias tee circuit electrically connecting the second antenna, the second proximity sensor, and the second transmission line to each other; and
   a fourth bias tee circuit electrically connecting the second radio frequency circuitry, the second voltage source, the second voltage-change detection circuitry, and the second transmission line to each other,
   wherein the first voltage-change detection circuitry is a comparator circuit connected to the modem circuit through a general purpose pin or the first voltage-change detection circuitry is an analog-to-digital converter of the modem circuit and the second voltage-change detection circuitry is a second comparator circuit connected to the modem circuit through a second general purpose pin or the second voltage-change detection circuitry is a second analog-to-digital converter of the modem circuit.

**Patentansprüche**

1. Kommunikationsvorrichtung (600, 700, 800), umfassend:

   eine Antenne (605, 705, 805);
   einen Näherungssensor (603, 703, 803), der dazu ausgelegt ist, menschliche Anwesenheit in der Nähe der Antenne (605, 705, 805) zu detektieren und ein Unterbrechungssignal zu generieren, wenn menschliche Anwesenheit detektiert wird;

eine Hochfrequenzschaltungsanordnung (633, 733, 833), die dazu ausgelegt ist, ein Hochfrequenzsignal über eine Übertragungsleitung (611, 711, 811) an die Antenne (605, 705, 805) zur Übertragung über den Äther bereitzustellen;

eine Spannungsquelle (637, 737, 837), die dazu ausgelegt ist, eine Stromversorgungsspannung für den Näherungssensor (603, 703, 803) bereitzustellen; und

eine Schaltungsanordnung zur Spannungsänderungsdetektion (635, 735, 835a, 835b), die dazu ausgelegt ist, das Unterbrechungssignal zu detektieren;

eine erste Bias-Tee-Schaltung (613, 713, 813), welche die Antenne (605, 705, 805), den Näherungssensor (603, 703, 803) und die Übertragungsleitung (611, 711, 811) elektrisch miteinander verbindet;

eine zweite Bias-Tee-Schaltung (615, 715, 815), welche die Hochfrequenzschaltungsanordnung (633, 733, 833), die Spannungsquelle (637, 737, 837), die Schaltungsanordnung zur Spannungsänderungsdetektion (635, 735, 835) und die Übertragungsleitung (611, 711, 811) elektrisch miteinander verbindet; und

eine Modemschaltungsanordnung (731, 1031), die dazu ausgelegt ist, eine Sendeleistung der Antenne zu bestimmen, basierend darauf, ob das Unterbrechungssignal detektiert wird, wobei die Modemschaltungsanordnung elektrisch mit der Hochfrequenzschaltungsanordnung verbunden ist,

wobei der Näherungssensor (603, 703, 803) elektrisch mit der ersten Bias-Tee-Schaltung (613, 713, 813) durch einen ersten Widerstand (621, ) verbunden ist, die Spannungsquelle (637, 737, 837) mit der zweiten Bias-Tee-Schaltung (615, 715, 815) durch einen zweiten Widerstand (623, 723, 823) elektrisch verbunden ist, die Schaltungsanordnung zur Spannungsänderungsdetektion (635, 735, 835a, 835b) mit einem Punkt zwischen dem zweiten Widerstand (623, 723, 823) und der zweiten Bias-Tee-Schaltung (615, 715, 815) elektrisch verbunden ist, wobei das Unterbrechungssignal ein Näherungsangabesignal mit einer Spannung ist, die einem Bruchteil der Stromversorgungsspannung entspricht, wobei der Bruchteil ein Verhältnis ist, das auf dem ersten und dem zweiten Widerstand basiert.

2. Kommunikationsvorrichtung nach Anspruch 1, wobei die erste und die zweite Bias-Tee-Schaltung (613, 615) jeweils einen ersten Port aufweisen, der dazu ausgelegt ist, Spannungsvorspannungssignale durchzuleiten, einen zweiten Port, der dazu ausgelegt ist, Hochfrequenzsignale durchzuleiten, und einen kombinierten Port, der dazu ausgelegt ist, sowohl die Spannungsvorspannungssignale als auch die Hochfrequenzsignale durchzuleiten.

3. Kommunikationsvorrichtung nach Anspruch 2, wobei die Antenne (605, 705, 805) mit dem zweiten Port der ersten Bias-Tee-Schaltung elektrisch verbunden ist, wobei der Näherungssensor (603, 703, 803) mit dem ersten Port der ersten Bias-Tee-Schaltung elektrisch verbunden ist und ein erstes Ende der Übertragungsleitung mit dem kombinierten Port der ersten Bias-Tee-Schaltung elektrisch verbunden ist, und

wobei die Hochfrequenzschaltungsanordnung (633, 733, 833) mit dem zweiten Port der zweiten Bias-Tee-Schaltung elektrisch verbunden ist, die Spannungsquelle (637, 737, 837) und die Schaltungsanordnung zur Spannungsänderungsdetektion (635, 735, 835a, 835b) mit dem ersten Port der zweiten Bias-Tee-Schaltung elektrisch verbunden sind, und ein zweites Ende der Übertragungsleitung elektrisch an den kombinierten Port der zweiten Bias-Tee-Schaltung gekoppelt ist.

4. Kommunikationsvorrichtung nach Anspruch 3, wobei der Näherungssensor (603, 703, 803) einen Leistungsport und einen Unterbrechungsport aufweist, der Leistungsport mit dem ersten Port der ersten Bias-Tee-Schaltung elektrisch verbunden ist und der Unterbrechungsport mit dem Leistungsport und dem ersten Port der ersten Bias-Tee-Schaltung durch einen ersten Widerstand elektrisch verbunden ist,

wobei die Hochfrequenzschaltungsanordnung (633, 733, 833) einen Antennenport aufweist, der mit dem zweiten Port der zweiten der zweiten Bias-Tee-Schaltung elektrisch verbunden ist,

wobei die Spannungsquelle (637, 737, 837) mit dem ersten Port der zweiten Bias-Tee-Schaltung durch den zweiten Widerstand (623, 723, 823) elektrisch verbunden ist, und wobei die Schaltungsanordnung zur Spannungsänderungsdetektion (635, 735, 835a, 835b) einen Spannungseingangsport aufweist, der elektrisch an den ersten Port der zweiten Bias-Tee-Schaltung gekoppelt ist.

5. Kommunikationsvorrichtung nach Anspruch 4, wobei der erste und der zweite Widerstand (621, 623, 721, 723, 821, 823) eine Widerstandsspannungsteilerschaltung umfassen.

6. Kommunikationsvorrichtung nach Anspruch 5, wobei der Näherungssensor (603, 703, 803) dazu ausgelegt ist, innerhalb eines Bereichs von Stromversorgungsspannungen betrieben zu werden, und wobei der Unterbrechungsport als eine offene Drain-Unterbrechung ausgelegt ist, und wobei die Widerstandsspannungsteilerschaltung dazu ausgelegt ist, eine Stromspannung innerhalb des Bereichs von Stromversorgungsspannungen bereitzustellen, wobei vorzugsweise die Stromspannung die Stromversorgungsspannung ist, wenn das Unterbrechungssignal nicht generiert wird, und die Stromspannung ein Bruchteil der Stromversorgungsspannung ist, wenn das Unterbrechungssignal generiert wird.

7. Kommunikationsvorrichtung nach einem der Ansprüche 1-6, wobei der erste Port der ersten und der zweiten Bias-Tee-Schaltung ein Niederfrequenzport ist und der zweite Port der ersten und der zweiten Bias-Tee-Schaltung ein Hochfrequenzport ist.

8. Kommunikationsvorrichtung nach einem der Ansprüche 1-7, wobei die Schaltungsanordnung zur Spannungsänderungsdetektion (635, 735, 835a) eine Spannungskomparator-Schaltungsanordnung aufweist.

9. Kommunikationsvorrichtung nach Anspruch 8, wobei die Schaltungsanordnung zur Spannungsänderungsdetektion (635, 735, 835a) einen zweiten Spannungseingangsport aufweist, der dazu ausgelegt ist, eine Referenzspannung zu empfangen, und einen Ausgangsport, der dazu ausgelegt ist, ein digitales Signal für die Modemschaltungsanordnung bereitzustellen, wobei die Spannungskomparator-Schaltungsanordnung dazu ausgelegt ist, eine Spannung an dem Spannungseingangsport mit der Referenzspannung zu vergleichen und ein digitale logische Ausgabe an dem Ausgangsport zu generieren, wobei die digitale logische Ausgabe angibt, ob das Unterbrechungssignal detektiert wird.

10. Kommunikationsvorrichtung nach einem der Ansprüche 1-7, wobei die Schaltungsanordnung zur Spannungsänderungsdetektion (635, 735, 835b) eine Analog/Digital-Wandler-Schaltungsanordnung umfasst, die in der Modemschaltungsanordnung enthalten ist.

11. Kommunikationsvorrichtung nach Anspruch 10, wobei die Analog/Digital-Wandler-Schaltungsanordnung eine Spannung an dem ersten Port der zweiten Bias-Tee-Schaltung in einen digitalen Wert konvertiert und die Schaltungsanordnung zur Spannungsänderungsdetektion (635, 735, 835b) den digitalen Wert mit einem vorbestimmten Schwellwert vergleicht und eine Ausgabe generiert, die angibt, ob das Unterbrechungssignal detektiert wird.

12. Kommunikationsvorrichtung nach einem der Ansprüche 1-11, wobei die Modemschaltungsanordnung (731, 1031) dazu ausgelegt ist, die Sendeleistung basierend auf vordefinierten Werten in einer der Antenne entsprechenden Nachschlagetabelle zu bestimmen.

13. Kommunikationsvorrichtung nach einem der Ansprüche 1-12, wobei der erste Port der ersten und der zweiten Bias-Tee-Schaltung eine Induktivität aufweisen, der zweite Port der ersten und der zweiten Bias-Tee-Schaltung einen Kondensator aufweisen und der kombinierte Port der ersten und der zweiten Bias-Tee-Schaltung einen Punkt zwischen der Induktivität und dem Kondensator aufweisen.

14. Kommunikationsvorrichtung nach einem der Ansprüche 1-13, wobei der Näherungssensor (603, 703, 803) ein SAR-Sensor ist.

15. Kommunikationsvorrichtung nach einem der Ansprüche 1 bis 14, ferner umfassend:

eine zweite Antenne;
einen zweiten Näherungssensor, der dazu ausgelegt ist, menschliche Anwesenheit in der Nähe der zweiten Antenne zu detektieren und ein zweites Unterbrechungssignal zu generieren, wenn menschliche Anwesenheit detektiert wird;
eine zweite Hochfrequenzschaltungsanordnung, die dazu ausgelegt ist, ein zweites Hochfrequenzsignal über eine zweite Übertragungsleitung für die zweite Antenne zur Übertragung über den Äther bereitzustellen;
eine zweite Spannungsquelle, die dazu ausgelegt ist, eine Stromversorgungsspannung für den zweiten Näherungssensor bereitzustellen; und
eine zweite Schaltungsanordnung zur Spannungsänderungsdetektion, die dazu ausgelegt ist, das zweite Unterbrechungssignal zu detektieren;
eine dritte Bias-Tee-Schaltung, welche die zweiten Antenne, den zweiten Näherungssensor und die zweite Übertragungsleitung elektrisch miteinander verbindet; und
eine vierte Bias-Tee-Schaltung, welche die zweite Hochfrequenzschaltungsanordnung, die zweite Spannungsquelle, die zweite Schaltungsanordnung zur Spannungsänderungsdetektion und die zweite Übertragungsleitung elektrisch miteinander verbindet,

wobei die erste Schaltungsanordnung zur Spannungsänderungsdetektion eine Komparatorschaltung ist, die mit der Modemschaltung durch einen Universalstift verbunden ist, oder die erste Schaltungsanordnung zur Spannungsänderungsdetektion ein Analog/Digital-Wandler der Modemschaltung ist und die zweite Schaltungsanordnung zur Spannungsänderungsdetektion eine zweite Komparatorschaltung ist, die mit der Modemschaltung durch einen zweiten Universalstift verbunden ist, oder die zweite Schaltungsanordnung zur Spannungsänderungsdetektion ein zweiter Analog/DigitalWandler der Modemschaltung ist.

**Revendications**

1. Dispositif de communication (600, 700, 800), comprenant :

    une antenne (605, 705, 805) ;
    un capteur de proximité (603, 703, 803) configuré pour détecter une présence humaine près de l'antenne (605, 705, 805) et générer un signal d'interruption lorsque la présence humaine est détectée ;
    une circuiterie radiofréquence (633, 733, 833) configurée pour fournir un signal radiofréquence, par l'intermédiaire d'une ligne de transmission (611, 711, 811), à l'antenne (605, 705, 805), pour transmission par liaison radio ;
    une source de tension (637, 737, 837) configurée pour fournir une tension d'alimentation en puissance au capteur de proximité (603, 703, 803) ; et
    une circuiterie de détection de changement de tension (635, 735, 835a, 835b) configurée pour détecter le signal d'interruption ;
    un premier circuit en T de polarisation (613, 713, 813) connectant électriquement l'antenne (605, 705, 805), le capteur de proximité (603, 703, 803), et la ligne de transmission (611, 711, 811) les uns aux autres ;
    un deuxième circuit en T de polarisation (615, 715, 815) connectant électriquement la circuiterie radiofréquence (633, 733, 833), la source de tension (637, 737, 837), la circuiterie de détection de changement de tension (635, 735, 835), et la ligne de transmission (611, 711, 811) les uns aux autres ; et une circuiterie de modem (731, 1031) configurée pour déterminer une puissance de transmission de l'antenne sur la base du fait que le signal d'interruption est détecté ou non, la circuiterie de modem étant connectée électriquement à la circuiterie radiofréquence,
    dans lequel le capteur de proximité (603, 703, 803) est connecté électriquement au premier circuit en T de polarisation (613, 713, 813) par le biais d'une première résistance (621, ), la source de tension (637, 737, 837) est connectée électriquement au deuxième circuit en T de polarisation (615, 715, 815) par le biais d'une seconde résistance (623, 723, 823), la circuiterie de détection de changement de tension (635, 735, 835a, 835b) est connectée électriquement à un point entre la seconde résistance (623, 723, 823) et le deuxième circuit en T de polarisation (615, 715, 815),
    dans lequel le signal d'interruption est un signal d'indication de proximité ayant une tension correspondant à une fraction de la tension d'alimentation en puissance, la fraction étant un rapport sur la base des première et seconde résistances.

2. Dispositif de communication de la revendication 1, dans lequel chacun des premier et deuxième circuits en T de polarisation (613, 615) inclut un premier port configuré pour faire passer des signaux de polarisation de tension, un deuxième port configuré pour faire passer des signaux radiofréquence, et un port combiné configuré pour faire passer à la fois les signaux de polarisation de tension et les signaux radiofréquence.

3. Dispositif de communication de la revendication 2, dans lequel l'antenne (605, 705, 805) est connectée électriquement au deuxième port du premier circuit en T de polarisation, le capteur de proximité (603, 703, 803) est connecté électriquement au premier port du premier circuit en T de polarisation, et une première extrémité de la ligne de transmission est connectée électriquement au port combiné du premier circuit en T de polarisation, et
    dans lequel la circuiterie radiofréquence (633, 733, 833) est connectée électriquement au deuxième port du deuxième circuit en T de polarisation, la source de tension (637, 737, 837) et la circuiterie de détection de changement de tension (635, 735, 835a, 835b) sont connectées électriquement au premier port du deuxième circuit en T de polarisation, et une seconde extrémité de la ligne de transmission est couplée électriquement au port combiné du deuxième circuit en T de polarisation.

4. Dispositif de communication de la revendication 3, dans lequel le capteur de proximité (603, 703, 803) inclut un port de puissance et un port d'interruption, le port de puissance est connecté électriquement au premier port du premier circuit en T de polarisation et le port d'interruption est connecté électriquement au port de puissance et au premier port du premier circuit en T de polarisation par le biais d'une première résistance,

dans lequel la circuiterie radiofréquence (633, 733, 833) inclut un port d'antenne connecté électriquement au deuxième port du deuxième circuit en T de polarisation, dans lequel la source de tension (637, 737, 837) est connectée électriquement au premier port du deuxième circuit en T de polarisation par le biais de la seconde résistance (623, 723, 823), et

dans lequel la circuiterie de détection de changement de tension (635, 735, 835a, 835b) inclut un port d'entrée de tension couplé électriquement au premier port du deuxième circuit en T de polarisation.

5. Dispositif de communication de la revendication 4, dans lequel les première et seconde résistances (621, 623, 721, 723, 821, 823) comprennent un circuit diviseur de tension à résistances.

6. Dispositif de communication de la revendication 5, dans lequel le capteur de proximité (603, 703, 803) est configuré pour fonctionner dans les limites d'une plage de tensions d'alimentation en puissance, et dans lequel le port d'interruption est configuré sous forme d'interruption à drain ouvert, et dans lequel le circuit diviseur de tension à résistances est configuré pour fournir une tension de puissance dans les limites de la plage de tensions d'alimentation en puissance,

dans lequel, de préférence, la tension de puissance est la tension d'alimentation en puissance lorsque le signal d'interruption n'est pas généré et la tension de puissance est une fraction de la tension d'alimentation en puissance lorsque le signal d'interruption est généré.

7. Dispositif de communication de l'une quelconque des revendications 1 à 6, dans lequel le premier port des premier et deuxième circuits en T de polarisation est un port basse fréquence et le deuxième port des premier et deuxième circuits en T de polarisation est un port haute fréquence.

8. Dispositif de communication de l'une quelconque des revendications 1 à 7, dans lequel la circuiterie de détection de changement de tension (635, 735, 835a) inclut une circuiterie comparateur de tension.

9. Dispositif de communication de la revendication 8, dans lequel la circuiterie de détection de changement de tension (635, 735, 835a) inclut un second port d'entrée de tension configuré pour recevoir une tension de référence et un port de sortie configuré pour fournir un signal numérique à la circuiterie de modem, dans lequel la circuiterie comparateur de tension est configurée pour comparer une tension au port d'entrée de tension à la tension de référence et générer une sortie logique numérique au port de sortie, dans lequel la sortie logique numérique indique le fait que le signal d'interruption est détecté ou non.

10. Dispositif de communication de l'une quelconque des revendications 1 à 7, dans lequel la circuiterie de détection de changement de tension (635, 735, 835b) comprend une circuiterie de conversion analogique-numérique incluse dans la circuiterie de modem.

11. Dispositif de communication de la revendication 10, dans lequel la circuiterie de conversion analogique-numérique convertit une tension au premier port du deuxième circuit en T de polarisation en une valeur numérique et la circuiterie de détection de changement de tension (635, 735, 835b) compare la valeur numérique à une valeur seuil prédéterminée et génère une sortie qui indique le fait que le signal d'interruption est détecté ou non.

12. Dispositif de communication de l'une quelconque des revendications 1 à 11, dans lequel la circuiterie de modem (731, 1031) est configurée pour déterminer la puissance de transmission sur la base de valeurs prédéfinies dans une table de consultation correspondant à l'antenne.

13. Dispositif de communication de l'une quelconque des revendications 1 à 12, dans lequel le premier port des premier et deuxième circuits en T de polarisation inclut un inducteur, le deuxième port des premier et deuxième circuits en T de polarisation inclut un condensateur, et le port combiné des premier et deuxième circuits en T de polarisation inclut un point entre l'inducteur et le condensateur.

14. Dispositif de communication de l'une quelconque des revendications 1 à 13, dans lequel le capteur de proximité (603, 703, 803) est un capteur SAR.

15. Dispositif de communication de l'une quelconque des revendications 1 à 14, comprenant en outre :

une seconde antenne ;
un second capteur de proximité configuré pour détecter une présence humaine près de la seconde antenne et générer un second signal d'interruption lorsque la présence humaine est détectée ;

une seconde circuiterie radiofréquence configurée pour fournir un second signal radiofréquence par l'intermédiaire d'une seconde ligne de transmission à la seconde antenne pour transmission par liaison radio ;

une seconde source de tension configurée pour fournir une tension d'alimentation en puissance au second capteur de proximité ; et

une seconde circuiterie de détection de changement de tension configurée pour détecter le second signal d'interruption ;

un troisième circuit en T de polarisation connectant électriquement la seconde antenne, le second capteur de proximité, et la seconde ligne de transmission les uns aux autres ; et

un quatrième circuit en T de polarisation connectant électriquement la seconde circuiterie radiofréquence, la seconde source de tension, la seconde circuiterie de détection de changement de tension, et la seconde ligne de transmission les uns aux autres,

dans lequel la première circuiterie de détection de changement de tension est un circuit comparateur connecté au circuit modem par le biais d'une broche à usage universel ou la première circuiterie de détection de changement de tension est un convertisseur analogique-numérique du circuit modem et la seconde circuiterie de détection de changement de tension est un second circuit comparateur connecté au circuit modem par le biais d'une seconde broche à usage universel ou la seconde circuiterie de détection de changement de tension est un second convertisseur analogique-numérique du circuit modem.

FIG. 1

FIG. 2

FIG. 3

FIG. 4

FIG. 5

FIG. 6

FIG. 7

FIG. 8A

FIG. 8B

900

```
                              ┌──────────┐
                              │  Start   │
                              └──────────┘
                                   │
                                   ▼
901                          ◇ Is human
        Yes ◄────────────────  proximity    ──────► No
         │                      detected?
         ▼
903   ┌──────────────────┐                    915   ┌──────────────────┐
      │ Sensor IC pulls  │                          │  Stop applying   │
      │ down interrupt   │                          │  TX power        │
      │ pin (NIRQ)       │                          │  back-off        │
      └──────────────────┘                          └──────────────────┘
         │                                                  ▲
         ▼                                                  │
905   ┌──────────────────┐                    913   ┌──────────────────┐
      │ Detect change in │                          │ Detect change in │
      │ voltage at       │                          │ voltage at       │
      │ module side      │                          │ module side      │
      └──────────────────┘                          └──────────────────┘
         │                                                  ▲
         ▼                                                  │
907   ┌──────────────────┐                    911   ┌──────────────────┐
      │ Apply TX power   │                          │  Sensor IC       │
      │ back-off (limit) │                          │  releases        │
      │ to antenna which │                          │  interrupt pin   │
      │ detected         │                          │  (NIRQ)          │
      │ proximity        │                          └──────────────────┘
      └──────────────────┘                                  ▲
         │                                                  │
         ▼                                                  │
909              ◇ Is human
   No ◄───────────  proximity     ──────► Yes
                    removed?
```

FIG. 9

FIG. 10A

FIG. 10B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

•  US 10469079 B1